# EUROPÄISCHE PATENTSCHRIFT

(11) **EP 0 952 052 B1**
(45) Veröffentlichungstag und Bekanntmachung des Hinweises auf die Patenterteilung: **16.03.2005**
(21) Anmeldenummer: 99106870.1
(22) Anmeldetag: 07.04.1999
(51) Int. Cl.: B60R 25/04, E05B 49/00, B60R 25/10

(54) **Vorrichtung für eine fernsteuerbare Zugangskontrolleinrichtung für Kraftfahrzeuge**
Device for a remote controllable access control device for vehicles
Dispositif pour un équipement de contrôle d'accès commandé à distance pour véhicules

(30) Priorität: 23.04.1998 DE 19818263
(43) Veröffentlichungstag der Anmeldung: 27.10.1999
(73) Patentinhaber: Volkswagen Aktiengesellschaft, 38436 Wolfsburg (DE)
(72) Erfinder: Havemann, Jörg, 29389 Bodenteich (DE); Patuschka, Sven, 38126 Braunschweig (DE); Pietsch, Matthias, 38154 Königslutter (DE); Lehmann, Sven, Dr., 38108 Braunschweig (DE)
(74) Vertreter: Banzer, Hans-Jörg, Dipl.-Ing.

(56) Entgegenhaltungen:
- EP-A- 0 735 219
- DE-A- 4 329 697
- US-A- 5 513 107

## Beschreibung

Die Erfindung betrifft eine Vorrichtung für eine fernsteuerbare Zugangskontrolleinrichtung für Kraftfahrzeuge, mittels einer im oder am Kraftfahrzeug angeordneten stationären Sendeund Empfangseinheit sowie eines tragbaren Identifikationsgebers.

Eine solche Zugangskontrolleinrichtung ist aus der EP 0 440 974 bekannt. Bei dieser Einrichtung werden ein Transponder und eine Sende- und Empfangseinheit mit einem Frage-Antwort-Dialog zum Identifizieren eines Kraftfahrzeugbenutzers und zum Entriegeln des Kraftfahrzeugs im Falle eines berechtigten Benutzers eingesetzt. Die Eingrenzung des Wirkungsbereichs bestimmter Funktionen der Zugangskontrolleinrichtung wird durch eine kleine Reichweite der Signale der Sendeeinheit gewährleistet, während der Transponder mit seiner großen Reichweite auch noch Zusatzfunktionen erfüllen kann, wie beispielsweise Fembedienen des Innenlichtes, Öffnen einer Garage oder Betätigen eines Fensterhebers. Eine solche Einrichtung muß allerdings auf einen mechanischen Schlüssel zurückgreifen, mit dem das Kraftfahrzeug entriegelt werden kann, wenn Störungen des Frage-Antwort-Dialogs zwischen dem Transponder und dem Kraftfahrzeug auftreten. Solche Störungen können beispielsweise das Absinken der Spannungsversorgung des Transponders oder der Sendeund Empfangseinheit unter einem zulässigen Grenzwert sein oder Störungen durch einen in näherer Umgebung strahlenden Störsender.

Aus der DE 43 29 697 ist eine solche Vorrichtung bekannt, bei der auf den Einsatz mechanischer Schlüssel verzichtet werden kann. Dabei wird durch eine stationäre Sendeeinheit durch Betätigen eines Auslösemittels ein Fragecodesignal ausgesendet. Ein tragbarer Transponder mit einem Sender und einem Empfänger wird infolgedessen aktiviert und sendet seinerseits ein Antwortsignal. Eine stationäre Sende- und Empfangseinheit liefert bei Übereinstimmung des Antwortcodesignals mit einem Sollcodesignal ein Entriegelungssignal an eine Entriegelungseinheit. In Abhängigkeit der Feldstärke oder der Codierung des Fragecodesignals kann das Antwortcodesignal vom Transponder mit einer anderen Übertragungsart, d.h. mit einem geänderten Signalparameter, ausgesendet werden. Die Signalparameter sind beispielsweise Reichweite, Frequenz, Feldstärke oder Bandrate der gesendeten Signale. Die Sende- und Empfangseinheit hat ihrerseits die Möglichkeit, das Antwortcodesignal mit Empfängern unterschiedlicher Empfindlichkeit oder mit Empfängern andersartige Übertragungsarten auszuwerten. Das Auslösemittel zum Auslösen des Fragecodesignals und damit zum Senden des Antwortcodesignals kann eine Taste des Transponders, ein Türgriff am Kraftfahrzeug oder ein Fragecodesignal sein, das zugleich in gewissen Zeitabständen von der Sende- und Empfangseinheit ausgesendet wird. Vorzugsweise wird der Transponder mit einer Notspannungsquelle ausgebildet, in der bei ungenügender Energieversorgung durch die Batterie des Transponders ein Teil der in dem Fragecodesignal enthaltenen Energie zwischengespeichert oder entzogen wird. Diese Energie reicht aus, um das Antwortcodesignal auszusenden. Die stationäre Sende- und Empfangseinheit kann mehrere Empfänger mit unterschiedlicher Empfindlichkeit und/oder einen Empfänger, der verschiedenartige Signale empfangen kann, aufweisen. Die Sende- und Empfangseinheit kann ebenfalls mit einer Notspannungsquelle ausgebildet sein, die die Sende- und Empfangseinheit und Teile der Zentralverriegelungsanlage bei Ausfall einer Hauptspannungsquelle hilfsweise mit Energie versorgt. Damit kann die Entriegelungseinheit bei Übereinstimmung des Antwortcodesignals mit dem Sollcodesignal zumindest einmal betätigt werden. Die Zugangskontrolleinrichtung kann auch als Wegfahrsperre bei einem Kraftfahrzeug dienen. Hierzu muß sich der Transponder im Fahrzeuginneren befinden. Nur wenn der Benutzer berechtigt ist, d.h. bei erfolgreichem Frage-Antwort-Dialog, kann der Motor gestartet werden. Die bekannte Vorrichtung kann daher völlig auf mechanische Schlüssel verzichten, so daß man auch von keyless-entry-Systemen spricht.

Aus der EP 0 735 219 A2 ist ein keyless-entry-System bekannt, bei welchem ein tragbarer Identifikationsgeber durch so genannte wake-up-Signale, die von einer fahrzeugseitigen Sendeeinrichtung ausgesendet werden, aktiviert wird, wenn sich der Kraftfahrzeugführer mit dem Identifikationsgeber dem Kraftfahrzeug nähert.

Aus der DE 0 741 221 ist weiterhin ein keyless-entry-System bekannt, bei dem das Signal des Identifikationsgebers erfaßt wird und aus dem erfaßten Signal auf die Annäherungsrichtung geschlossen wird, so daß dann die der Annäherungsrichtung benachbarte Tür geöffnet wird.

Aus den oben genannten Veröffentlichungen bekannten Merkmale finden sich im Oberbegriff des Anspruchs 1.

Nachteilig an allen bekannten Zugangskontrolleinrichtungen ist, daß diese entweder bei hohem Komfort Sicherheitsprobleme aufweisen oder aber bei hoher Sicherheit einen geringeren Komfort hinsichtlich des Zugangs zum Kraftfahrzeug aufweisen. Weiterhin ist bei den bekannten Zugangskontrolleinrichtungen eine Fernsteuerbarkeit von bestimmten Fahrzeugfunktionen durch einen berechtigten Benutzes nur eingeschränkt möglich.

Der Erfindung liegt daher das technische Problem zugrunde, eine Vorrichtung für eine fernsteuerbare Zugangskontrolleinrichtung für Kraftfahrzeuge zu schaffen, die hohen Komfort und Sicherheit miteinander vereinigt.

Die Lösung des technischen Problems ergibt sich durch die Merkmale des Patentanspruchs 1. Die abhängigen Ansprüche definierten bevorzugte und vorteilhafte Ausführungsformen der Erfindung. Durch die Anordnung mindestens einer Sensorik am Kraftfahrzeug, die von außen betätigbar bzw. mittels derer außerhalb des Kraftfahrzeuges befindliche Objekte sensierbar sind und mit der Stelleinrichtung und/oder der Auswerteelektronik und/oder der Verriegelungseinrichtung verbunden ist, wird erreicht, daß bei einem positiven Ergebnis einer Identifikation eine weitere bewußte Handlung des Kraftfahrzeugführers notwendig ist, um Zugang zum Kraftfahrzeug zu erlangen. Diese bewußte Handlung scheint auf den ersten Blick den Komfort zu reduzieren, jedoch kann diese zum einen in den natürlichen Ablauf beim Ein- oder Aussteigen eingearbeitet werden, zum anderen ist die einzige bewußte Handlung, die der Kraftfahrzeugführer zuvor mindestens tun mußte, lediglich das Zugehen auf das Kraftfahrzeug, so daß insgesamt der Komfort der Zugangskontrolleinrichtung nicht beeinträchtigt wird. Hinsichtlich der Sicherheit bewirkt die zusätzliche bewußte Handlung, daß ein versehentliches Entriegeln des Kraftfahrzeuges vermieden wird, beispielsweise wenn der Kraftfahrzeugführer mit dem Identifikationsgeber am Kraftfahrzeug vorbeigeht. Zum anderen nutzt einem Dritten der Identifikationsgeber alleine noch nichts, da ohne Kenntnis, was für eine Handlung vorzunehmen ist, der Zugang zum Kraftfahrzeug nicht möglich ist. Weitere vorteilhafte Ausgestaltungen der Erfindung ergeben sich aus den Unteransprüchen.

In einer bevorzugten Ausführungsform ist die Sensorik als Berührungssensor ausgebildet, wobei diese im einfachsten Fall am Türgriff des Kraftfahrzeuges angeordnet ist. Zur Erhöhung der Sicherheit kann der Berührungssensor zusätzlich mit einer Spracherkennungs-Einrichtung, einer Fingerabdruckerkennungs-Einrichtung und/oder einer Gesichtserkennungs-Einrichtung gekoppelt werden.

Vorzugsweise ist die Vorrichtung mit einem Bewegungssensor ausgebildet, was eine energetisch sehr günstige Betriebsweise ermöglicht. Sowohl die Vorrichtung als auch der Identifikationsgeber arbeiten dabei normalerweise im stand-by-Betrieb. Erst wenn die Vorrichtung eine Bewegung auf das Kraftfahrzeug zu erfaßt, wird abgefragt, ob sich die zugehörige Identifikationsgeber in der Nähe befindet. Ist dies nicht der Fall, so wechselt die Vorrichtung wieder in den stand-by-Betrieb. Wird hingegen der Identifikationsgeber erfaßt, so aktiviert das Abfragesignal auch den Identifikationsgeber.

Als zusätzliche Sicherheit gegen Diebstahl einzelner Fahrzeugkomponenten, wie beispielsweise Radio, CD-Player, Airbag und ähnliche, werden diese durch die Verriegelungseinrichtung elektronisch codiert, so daß bei einer gewaltsamen Entnahme diese funktionsuntüchtig sind.

Weiter kann vorgesehen sein, daß dem Identifikationsgeber eine Fernbedienung zugeordnet ist. Diese ist jedoch aus Sicherheitsgründen erst funktionsfähig, falls der Identifikationsgeber durch das Abfragesignal der Vorrichtung aktiviert wurde. Mittels der Fernbedienung können dann Komfortfunktionen wie beispielsweise Licht, Voreinstellungen für Sitz, Spiegel oder ein Verdeck, angesteuert werden.

Die Erfindung wird nachfolgend anhand eines bevorzugten Ausführungsbeispiels näher erläutert. Die Fig. zeigen:
- Fig. 1: eine schematische Darstellung des Annäherns an ein Kraftfahrzeug und
- Fig. 2: ein schematisches Blockschaltbild einer Vorrichtung für eine femsteuerbare Zugangskontrolleinrichtung.

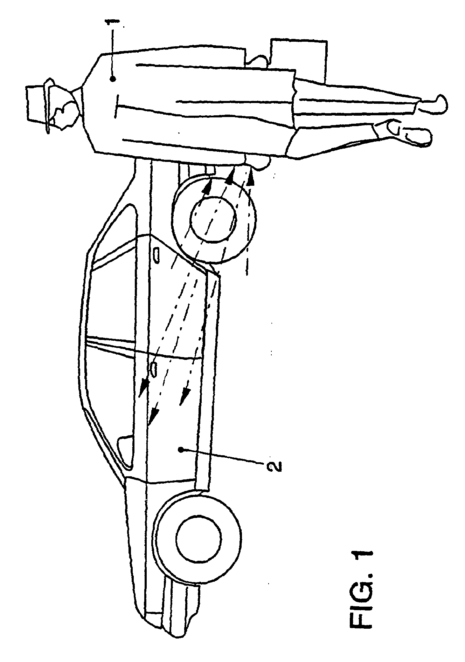

In der Fig. 1 ist schematisch das Annähern eines potentiellen Kraftfahrzeugführers 1 an ein Kraftfahrzeug 2 dargestellt. Mittels eines nicht dargestellten Bewegungssensors erfaßt das Kraftfahrzeug 2, daß sich möglicherweise der berechtigte Kraftfahrzeugführer 1 dem Kraftfahrzeug 2 nähert. Der Bewegungssensor aktiviert die Vorrichtung für die Zugangskontrolle, die daraufhin ein Abfragesignal aussendet. Dieses Abfragesignal ist auf einen transportablen Identifikationsgeber des berechtigten Kraftfahrzeugführers 1 abgestimmt. Dieser Identifikationsgeber kann dabei beispielsweise als Armband, Chipkarte oder ähnliches ausgebildet sein. Ist der Identifikationsgeber innerhalb der Reichweite des Abfragesignals, so wird dieser durch den Empfang des Abfragesignals vom stand-by-Betrieb in einem aktiven Zustand gehalten. Der Identifikationsgeber sendet daraufhin ein entsprechend codiertes Signal an das Kraftfahrzeug 2, was dieses auswertet. Bei positivem Ergebnis bleibt die Vorrichtung aktiv, ansonsten wechselt die Vorrichtung zurück in den stand-by-Betrieb und alle Sperren und Verriegelungen bleiben aktiv.

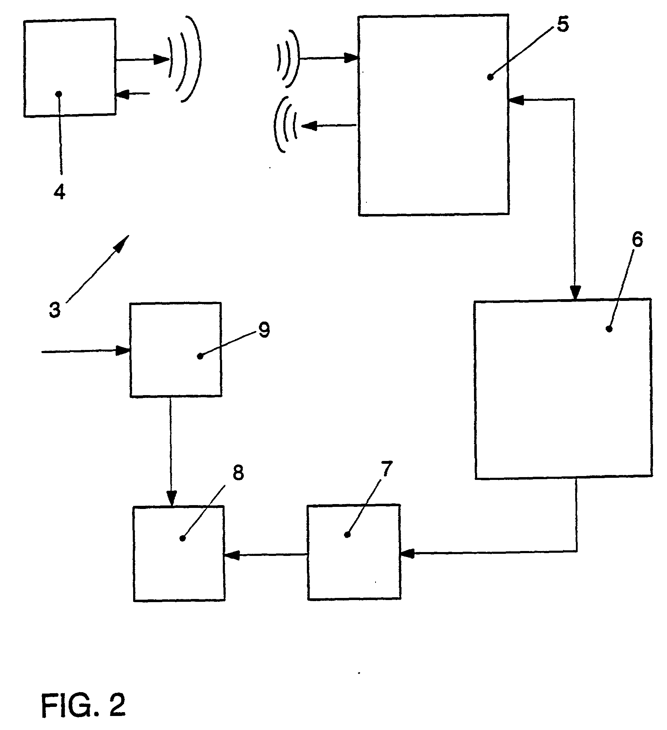

In der Fig. 2 ist ein schematisches Blockschaltbild der Vorrichtung 3 dargestellt. Die Vorrichtung 3 umfaßt einen transportablen Identifikationsgeber 4, eine Sende-Empfangs-Einheit 5, eine Auswerteelektronik 6, eine Stelleinrichtung 7, eine Verriegelungseinrichtung 8 und eine Sensorik 9. Der transportable Identifikationsgeber 4 steht, wie zuvor bereits beschrieben, mit der Sende-Empfangs-Einheit 5 in Wechselverbindung. Die Kommunikation zwischen Identifikationsgeber 4 und Sende-Empfangseinheit 5 erfolgt dabei mittels Hochfrequenz. Die Sende-Empfangseinheit 5 ist ausgangsseitig mit der Auswerteelektronik 6 verbunden. Die Auswerteelektronik 6 ist mit der Stelleinrichtung 7 verbunden, die wie die Sensorik 9 mit einem Steuereingang der Verriegelungseinrichtung 8 verbunden ist. Die Verriegelungseinrichtung 8 umfaßt eine Zentralverriegelung, eine Lenkradverriegelung und eine Alarmanlage. Das vom transportablen Identifikationsgeber 4 ausgesendete Signal als Antwort auf das Abfragesignal der Sende-Empfangs-Einheit 5 wird von dieser empfangen und an die Auswerteelektronik 6 weitergeleitet. Die Auswerteelektronik 6 überprüft das Signal auf die richtige Codierung. Bei einer Übereinstimmung der Codierungen erzeugt die Auswerteelektronik 6 ein Steuersignal für die Stelleinrichtung 7. Die Stelleinrichtung 7 steuert die Verriegelungseinrichtung 8 an, wodurch dieser signalisiert, daß die Abfrage des Identifikationsgebers 4 positiv war. Die Verriegelungseinrichtung 8 bleibt jedoch solange gesperrt, bis auch von der Sensorik 9 ein Signal zum Öffnen kommt. Erhält die Verriegelungseinrichtung 8 nicht innerhalb eines vorgebbaren Zeitraumes ein Signal von der Sensorik 9, so wird dies der Auswertelektronik 6 mitgeteilt, die dann das Steuersignal für die Stelleinrichtung 7 zurücksetzt. Entsprechend dem zuvor beschriebenen Zutritt kann auch das Verlassen und Abschließen des Kraftfahrzeuges 2 realisiert werden. Dazu wird zusätzlich im Innern des Kraftfahrzeuges 2 eine Antenne der Sende-Empfangs-Einheit 5 angeordnet, so daß diese unterscheiden kann, ob sich der Identifikationsgeber 4 inner- oder außerhalb des Kraftfahrzeuges 2 befindet. Befindet sich der Identifikationsgeber 4 außerhalb, so wird zusätzlich noch über einen Türsensor erfaßt, ob die Tür geschlossen ist. Trifft beides zu und hat der Kraftfahrzeugführer 1 davor im Innern oder danach außen die Sensorik 9 betätigt, so wird das Kraftfahrzeug 2 verriegelt.

## Patentansprüche

1. Vorrichtung für eine fernsteuerbare Zugangskontrolleinrichtung für Kraftfahrzeuge, umfassend einen transportablen Identifikationsgeber (4), eine im oder am Kraftfahrzeug angeordnete Sende-Empfangseinheit (5), eine mit der Sende-Empfangseinheit (5) verbundene Auswerteelektronik (6) zur Erzeugung eines ersten Steuersignals bei Ü bereinstimmung einer durch den transportablen Identifkationsgeber (4) übermittelten Codierung mit einer Sollcodierung und eine mit der Auswerteelektronik verbundene Stelleinrichtung zur Erzeugung eines zweiten Steuersignals für eine Verriegelungseinrichtung abhängig von dem ersten Steuersignal, wobei
mindestens eine Sensorik (9) am Kraftfahrzeug (2) angeordnet ist, die von außen betätigbar bzw. mittels derer außerhalb des Kraftfahrzeuges (2) befindliche Objekte sensierbar sind, wobei die Sensorik (9) mit der Stelleinrichtung (7) und/oder der Auswerteelektronik (6) und/oder der Verriegelungseinrichtung (8) derart verbunden ist, daß die Verriegelungseinrichtung (8) bei Vorliegen zumindest des ersten Steuersignals erst bei Erzeugung eines entsprechenden Signals durch die Sensorik (9) zum Verriegeln bzw. Entriegeln angesteuert wird.

2. Vorrichtung nach Anspruch 1, **dadurch gekennzeichnet, daß** die Sensorik (9) als Berührungssensor, als Sprach-Erkennungs-, als Fingerabdruck-Erkennungs- und/oder als Gesichtsmuster-Erkennungs-Einrichtung ausgebildet ist.

3. Vorrichtung nach Anspruch 1 oder 2, **dadurch gekennzeichnet, daß** der Vorrichtung (3) ein Bewegungssensor zugeordnet ist.

4. Vorrichtung nach einem der Ansprüche 1 bis 3, **dadurch gekennzeichnet, daß** mindestens eine weitere Sensorik (9) im Innenraum des Kraftfahrzeuges (2) angeordnet ist.

5. Vorrichtung nach einem der Ansprüche 1 bis 4, **dadurch gekennzeichnet, daß** über die Auswerteelektronik (6) Systemkomponenten des Kraftfahrzeuges (2) elektrisch deaktivierbar sind.

6. Vorrichtung nach einem der vorangegangenen Ansprüche, **dadurch gekennzeichnet, daß** dem transportablen Identifikationsgeber (4) eine Fernbedienung begrenzter Reichweite zugeordnet ist, mittels derer Komfortfunktionen des Kraftfahrzeuges (2) ansteuerbar sind.

## Claims

1. Device for a remote-controllable access control device for motor vehicles, comprising a portable identification signal transmitter (4), a transceiver unit (5) which is arranged in or on the motor vehicle, an electronic evaluation system (6), connected to the transceiver unit (5), for generating a first control signal when a code which is transmitted by the portable identification signal transmitter (4) corresponds to a setpoint code, and an actuating device which is connected to the electronic evaluation system and has the purpose of generating a second control signal for a locking device as a function of the first control signal, wherein at least one sensor system (9) is arranged on the motor vehicle (2) and can be actuated from the outside and be used to detect objects located outside the motor vehicle (2), wherein the sensor system (9) is connected to the actuating device (7) and/or to the electronic evaluation system (6) and/or to the locking device (8) in such a way that, when at least the first control signal is present, the locking device (8) is not actuated by the sensor system (9) to lock or unlock until a corresponding signal is generated.

2. Device according to Claim 1, **characterized in that** the sensor system (9) is embodied as a contact sensor, as a voice detection device, fingerprint detection device and/or face pattern detection device.

3. Device according to Claim 1 or 2, **characterized in that** a movement sensor is assigned to the device (3).

4. Device according to one of Claims 1 to 3, **characterized in that** at least one further sensor system (9) is arranged in the passenger compartment of the motor vehicle (2).

5. Device according to one of Claims 1 to 4, **characterized in that** system components of the motor vehicle (2) can be deactivated electrically by means of the electronic evaluation system (6).

6. Device according to one of the preceding claims, **characterized in that** the portable identification signal transmitter (4) has an associated limited-range remote control system by means of which comfort systems of the motor vehicle (2) can be actuated.

## Revendications

1. Dispositif pour un équipement de contrôle d'accès commandé à distance pour véhicules automobiles, comprenant un émetteur d'identification transportable (4), une unité émettrice-réceptrice (5) disposée dans ou sur le véhicule automobile, une électronique d'analyse (6) connectée à l'unité émettrice-réceptrice (5) pour produire un premier signal de commande dans le cas d'une coïncidence entre un code transmis par l'émetteur d'identification transportable (4) et un code de consigne et un équipement de commande connecté à l'électronique d'analyse pour produire un deuxième signal de commande pour un dispositif de verrouillage, en fonction du premier signal de commande,
au moins un système de détection (9) étant disposé sur le véhicule automobile (2), lequel peut être activé depuis l'extérieur ou au moyen duquel des objets se trouvant à l'extérieur du véhicule automobile (2) peuvent être détectés, le système de détection (9) étant connecté à l'équipement de commande (7) et/ou à l'électronique d'analyse (6) et/ou au dispositif de verrouillage (8) de telle sorte que le dispositif de verrouillage (8) reçoive un ordre de verrouillage ou de déverrouillage en présence d'au moins le premier signal de commande seulement en cas de génération d'un signal correspondant par le système de détection (9).

2. Dispositif selon la revendication 1, **caractérisé en ce que** le système de détection (9) est réalisé sous la forme d'un capteur tactile, d'un dispositif de reconnaissance vocale, d'un dispositif de reconnaissance d'empreintes digitales, et/ou d'un dispositif de reconnaissance faciale.

3. Dispositif selon la revendication 1 ou 2, **caractérisé en ce qu'**un capteur de mouvement est associé au dispositif (3).

4. Dispositif selon l'une quelconque des revendications 1 à 3, **caractérisé en ce qu'**au moins un autre système de détection (9) est disposé dans l'habitacle du véhicule automobile (2).

5. Dispositif selon l'une quelconque des revendications 1 à 4, **caractérisé en ce que** l'électronique d'analyse (6) permet de désactiver électriquement des composants du système du véhicule automobile (2).

6. Dispositif selon l'une quelconque des revendications précédentes, **caractérisé en ce que** l'on associe à l'émetteur d'identification transportable (4) une commande à distance de portée limitée, au moyen de laquelle on peut commander des fonctions de confort du véhicule automobile (2).
